**Europäisches Patentamt**

(19) **European Patent Office**

**Office européen des brevets**

(11) Veröffentlichungsnummer: **0 145 652**

**B1**

(12) # EUROPÄISCHE PATENTSCHRIFT

(45) Veröffentlichungstag der Patentschrift:
08.04.87

(21) Anmeldenummer: **84810500.3**

(22) Anmeldetag: **11.10.84**

(51) Int. Cl.⁴: **A 61 C 5/08, A 61 C 13/30**

---

(54) **Einrichtung mit einem Schraubstift zum Einschrauben in einen Zahn und einer Spannvorrichtung zum Halten des Schraubstiftes.**

---

(30) Priorität: **17.11.83 CH 6183/83**

(43) Veröffentlichungstag der Anmeldung:
**19.06.85 Patentblatt 85/25**

(45) Bekanntmachung des Hinweises auf die Patenterteilung:
**08.04.87 Patentblatt 87/15**

(84) Benannte Vertragsstaaten:
**AT BE DE FR GB IT NL SE**

(56) Entgegenhaltungen:
**EP-A-0 059 068**
**EP-A-0 076 084**
**DE-B-2 225 863**
**FR-A-2 516 376**
**US-A-3 874 081**

**DIE QUINTESSENZ Nr. 9, September 1976, Berlin;
R.B. WINSTANLEY "Ein neuer Stifttyp", Seiten 17-21**

(73) Patentinhaber: **INSTITUT STRAUMANN AG, CH-4437 Waldenburg (CH)**

(72) Erfinder: **Sutter, Franz, Bennwilerstrasse 42, CH-4435 Niederdorf (CH)**

(74) Vertreter: **Eder, Carl E., Patentanwaltsbüro EDER AG Münchensteinerstrasse 2, CH- 4052 Basel (CH)**

EP 0 145 652 B1

## Beschreibung

Die Erfindung betrifft eine Einrichtung gemäss dem Oberbegriff des Anspruches 1.

Bekannte zum Einschrauben in Zähne vorgesehene Parapulpär-Schraubstifte (EP-A-0 076 084) weisen einen Gewindeteil und einen vorübergehend mit einer Spannvorrichtung festspannbaren Spannteil auf. Die Spannvorrichtung ist durch einen Dorn gebildet, dessen eines Ende lösbar mit dem Winkelstück einer Bohrmaschine verbunden werden kann und dessen anderes Ende mit einem Loche oder Schlitz versehen ist, in dem der Spannteil festgeklemmt werden kann. Zwischen dem Gewinde- und dem Spannteil der Schraubstifte ist eine ringförmige Kerbe Vorhanden, die eine Sollbruchstelle bildet.

Wenn ein derartiger Parapulpär-Schraubstift in einen Zahn eingesetzt werden soll, wird zuerst eine Bohrung in den Zahn gebohrt. Danach entnimmt man mit einer Pinzette oder dergleichen einen die Schraubstift enthaltenden Vorrätsbehälter einen Stift und setzt diesen in die im Winkelstück einer Bohrmaschine steckende Spannvorrichtung ein. Nun wird der Schraubstift mit der Bohrmaschine maschinell in die Bohrung eingeschraubt. Wenn der Schraubstift im oder am Zahn ansteht, bricht er bei der Kerbe ab. Der Gewindeteil und ein allenfalls noch an diesem vorhandener Kopfteil verbleibt dann im Zahn, während der Spannteil in der Spannvorrichtung steckenbleibt.

Bei einem derartigen Schraubstift wird also der Spannteil von dem im Zahn verbleibenden Teil abgetrennt, wodurch ein kostenerhöhender Materialverlust entsteht. Ein weiterer Nachteil besteht auch noch darin, dass der Spannteil durch eine separate Arbeitsoperation aus der Spannvorrichtung herausgenommen werden muss und dass auch das Einsetzen eines Schraubstiftes in die Spannvorrichtung verhältnismässig zeitraubend ist. Diese Arbeitsoperationen werden insbesondere durch die kleinen Abmessungen der Schraubstifte erschwert, deren Gewindeteile ja üblicherweise Durchmesser haben, die höchstens 1 mm und beispielsweise 0,35 bis 0,8 mm betragen.

Im übrigen sind auch noch Schraubstifte bekannt, (DE-A-22 25 863) die ursprünglich zwei Gewindeteile und zwei als Sollbruchstellen bestimmte, ringförmige Kerben aufweisen, von denen die eine zwischen dem Spannteil und dem sich näher bei diesem befindenden Gewindeteil und die andere zwischen den beiden Gewindeteilen angeordnet ist. Man kann dann zuerst den vorderen Gewindeteil in eine Bohrung einschrauben, den Schraubstift zwischen den beiden Gewindeteilen abbrechen, den hinteren Gewindeteil in eine andere Bohrung einschrauben und danach den Spannteil vom hinteren Gewindeteil abbrechen. Durch diese Ausbildung der Schraubstifte soll der Materialverlust gegenüber den vorgängig beschriebenen, ursprünglich nur einen Gewindeteil aufweisenden Schraubstifte gesenkt werden. Die Schraubstifte mit zwei Gewindeteilen haben jedoch den Nachteil, dass ihre Handhabung wegen der ursprünglich grösseren Länge schwieriger ist. Zudem kann es vorkommen, dass der Schraubstift am Ende des Einschraubvorganges des vorderen Gewindeteiles statt zwischen den beiden Gewindeteilen zwischen dem hinteren Gewindeteil und dem Spannteil bricht, was dann zur Folge hat, dass der hintere Gewindeteil durch eine separate Arbeitsoperation vom vorderen, eingeschraubten Gewindeteil abgebrochen werden muss und nicht mehr verwendbar ist, wodurch der Materialverlust noch vergrössert wird.

Der Erfindung liegt nun die Aufgabe zugrunde, eine Einrichtung zu schaffen, bei der ein in einen Zahn einzuschraubender Schraubstift von der Spannvorrichtung beim Erreichen der vorgesehenen Einschraubtiefe selbsttätig von der Spannvorrichtung getrennt wird, ohne dass dabei der Spannteil abgebrochen werden muss.

Diese Aufgabe wird durch eine Einrichtung gelöst, die nach der Erfindung gemäss dem Anspruch 1 ausgebildet ist. Vorteilhafte Ausgestaltungen der Erfindung gehen aus den abhängigen Ansprüchen hervor.

Der Erfindungsgegenstand soll nun anhand eines in der Zeichnung dargestellten Ausführungsbeispiels einer Einrichtung und einer Variante davon erläutert werden. In der Zeichnung zeigen

die Figur 1 eine Einrichtung mit einer Antriebsvorrichtung, einer Spannvorrichtung und einem Schraubstift,

die Figur 2 eine Ansicht eines Schraubstiftes in grösserem Maßstab,

die Figur 3 eine Draufsicht auf die Stirnseite des Spannteils des Schraubstiftes,

die Figur 4 einen axialen Schnitt durch die Spannvorrichtung im gleichen Maßstab wie die Figur 2, wobei der Dorn in Ansicht dargestellt ist,

die Figur 5 eine perspektivische Ansicht des Spannteils des Schraubstiftes und des den Mitnehmer aufweisenden Endabschnittes des Dorns der Spannvorrichtung, in noch grösserem Maßstab,

die Figur 6 eine Draufsicht auf einen Behälter zum Aufnehmen von Schraubstiften, wobei der Deckel des Behälters entfernt ist,

die Figur 7 einen Schnitt durch einen Teil des Behälters und die Spannvorrichtung beim Herausnehmen eines Schraubstiftes aus dem Behälter, im gleichen Maßstab wie die Figuren 2 bis 4,

die Figur 8 einen Schnitt durch einen Teil eines Zahnes und die Spannvorrichtung beim Einschrauben eines Schraubstiftes in den Zahn,

die Figur 9 einen Schnitt durch die in der Figur 8 dargestellten Teile, aber bei vollständig eingeschraubtem Schraubstift und von diesem entkuppelten Mitnehmer,

die Figur 10 einen Schnitt durch einen Handgriff und

die Figur 11 eine teils in Ansicht, teils im Schnitt gezeichnete Darstellung einer Variante der Spannvorrichtung.

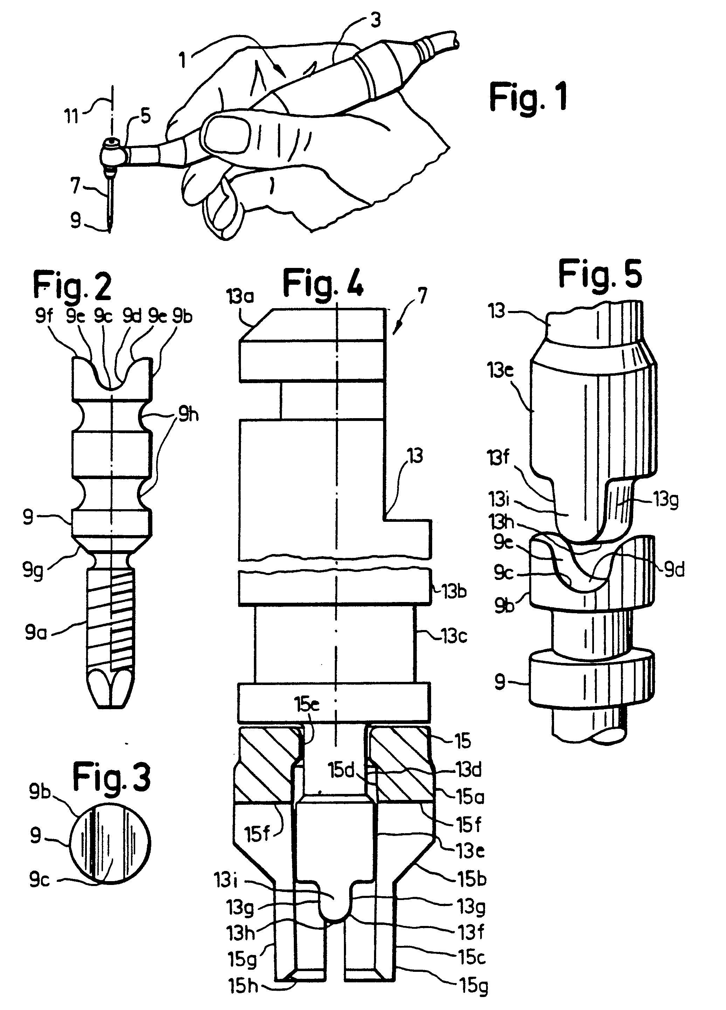

Die in der Figur 1 ersichtliche Einrichtung weist eine Antriebsvorrichtung 1 mit einem Motor 3 und einem mit einsm Getriebe versehenen Winkelstück 5 auf, wobei die Antriebsvorrichtung 1 durch eine der üblicherweise in der Zahnmedizin benutzten Bohrmaschinen gebildet sein kann. Das Winkelstück 5 ist mit einem ebenfalls üblichen Schnappriegelverschluss versehen, in dem eine Spannvorrichtung 7 lösbar befestigt ist, die ihrerseits einen Schraubstift 9 lösbar hält. Die Antriebsvorrichtung kann die Spannvorrichtung 7 und den Schraubstift 9 im Betriebszustand um die Drehachse 11 drehen. Die Spannvorrichtung 7 und der Schraubstift 9 sind im allgemeinen rotationssymmetrisch zu ihren Längsachsen, die in dem in der Figur 1 dargestellten Zustand mit der Drehachse 11 zusammenfallen.

Der separat in den Figuren 2 und 3 und zum Teil auch noch in der Figur 5 dargestellte, vorzugsweise metallische, beispielsweise aus rostfreiem Stahl bestehende Schraubstift 9 weist einenends einen Gewindeteil 9a und andernends einen in der Spannvorrichtung 7 lösbar einspannbaren Spannteil 9b auf. Das Gewinde des Gewindeteils 9a ist vorzugsweise selbstschneidend ausgebildet und der Gewindeteil 9a ist an seinem freien Ende zweckmässigerweise mit mindestens einer bezüglich der Drehachse geneigten, zur Verbesserung der Schneideigenschaften des Gewindeanfangs dienenden, geschliffenen Fläche, beispielsweise mit drei einen Pyramidenstumpf bildenden Flächen oder einer Kerbe versehen.

Der Spannteil 9b ist von seinem freien Ende her mit einem Einschnitt 9c versehen, der entlang einem Durchmesser des Spannteils 9b verläuft und in sich diametral gegenüberstehende Stellen der Umfangsfläche des Spannteils mündet. Der Einschnitt 9c wird in dem in der Figur 2 ersehbaren Profil und also auch in einem zur Zeichenebene der Figur 2 parallelen Axialschnitt entlang der Schraubstift-Drehachse vom freien Ende des Spannteils 9b her zum Einschnitt-Grund hin schmäler, wobei er sich in der genannten axialen Richtung stetig verengt. Der Grundabschnitt des Einschnittes 9c ist durch eine Begrenzungsfläche 9d des Spannteils 9b begrenzt, die in dem parallel zur Zeichenebene der Figur 2 verlaufenden Axialschnitt konkav gekrümmt ist. Der Mündungsabschnitt des Einschnittes 9c ist beidseitig durch eine im genannten Axialschnitt konvex gekrümmte Begrenzungsfläche 9e begrenzt, die stetig an die konkave Begrenzungsfläche 9d anschliesst und stetig in die radiale, d.h. ebene, zur Schraubstift-Drehachse rechtwinklige Stirn- oder Endfläche 9f des Spannteils 9b übergeht. Die konkave Begrenzungsfläche 9d verläuft entlang einem höchstens 180°, nämlich gleich 180° betragenden Kreisbogen und die beiden konvexen Begrenzungsflächen 9e verlaufen entlang einem höchstens 90°, nämlich gleich 90° betragenden Kreisbogen. Der Krümmungsradius der beiden Begrenzungsflächen 9e ist vorzugsweise mindestens ungefähr gleich dem Krümmungsradius der Begrenzungsfläche 9d. Die Umfangsfläche oder, genauer gesagt, die Umfangshüllfläche des Spannteils 9b ist zylindrisch und hat einen grösseren Durchmesser als der Gewindeteil 9a. Beim Übergang vom Gewindeteil 9a zum Spannteil 9b ist eine vom Gewindeteil 9a weg nach aussen ragende, nämlich sich konisch zum freien Ende des Spannteils 9b hin erweiternde Anschlagfläche 9g zum Begrenzen der Einschraubtiefe des Schraubstiftes 9 vorhanden. Der Spannteil 9b ist vorzugsweise mit mindestens einer Ringnut 9h versehen, die seine zylindrische Umfangsfläche in axial gegeneinander versetzte Abschnitte unterteilt.

Beim Schraubstift 9 handelt es sich um einen sogenannten Parapulpär-Schraubstift, der parapulpär, d.h. vollständig ausserhalb der Pulpa in einen üblicherweise noch vitalen Zahn eingeschraubt wird. Der Durchmesser des Gewindeteils 9a beträgt mindestens etwa 0,3 mm, höchstens etwa 1 mm und beispielsweise etwa 0,4 bis 0,9 mm. Der Durchmesser des Spannteils 9b ist zweckmässigerweise ungefähr 0,3 bis 0,5 mm grösser als derjenige des Gewindeteils und die Krümmungsradien der Begrenzungsflächen 9d und 9e können beispielsweise im Bereich von 0,1 bis 0,3 mm liegen. Die Länge des Gewindeteils 9a kann beispielsweise etwa 1,5 bis 2,5 mm betragen und die Länge des Spannteils 9b kann etwa 1,5 bis 3,5 mm betragen.

Die separat in der Figur 4 dargestellte Spannvorrichtung 7 weist einen einstückigen, etwa metallischen, beispielsweise aus rostfreiem Stahl bestehenden Dorn 13 auf, dessen einer Endabschnitt 13a eine lösbar mit dem Schnappriegelverschluss des Winkelstücks 5 verbindbare Kupplung bildet. An den Endabschnitt 13a schliesst ein zylindrischer Mittelabschnitt 13b an, der mit einer ringförmigen, eine Kenn-Farbe aufweisenden Markierungsrille 13c versehen ist. Der Mittelabschnitt 13b hängt auf seiner dem Endabschnitt 13a abgewandten Seite über eine zylindrische Einschnürung 13d mit einem zapfenförmigen, zylindrischen Abschnitt 13e zusammen, dessen Durchmesser kleiner als derjenige des Mittelabschnittes 13b ist. Der zapfenförmige Abschnitt 13e ist auf seiner dem Endabschnitt 13a abgewandten Seite durch eine radiale, ebene Stirnfläche begrenzt, von der in axialer Richtung ein Mitnehmer 13f wegragt, der das dem Endabschnitt 13a abgewandte Ende des Dorns 13 bildet und auch in der Figur 5 ersichtlich ist. Der Mitnehmer 13f erstreckt sich entlang einem Durchmesser der Stirnfläche des zapfenförmigen Abschnittes 13e und weist einen mit dem letzteren zusammenhängenden Wurzelabschnitt auf, dessen Breitseiten abgesehen von verrundeten Obergängen durch ebene, zueinander und zur Drehachse der Spannvorrichtung 7 parallele Begrenzungsflächen 13g gebildet werden. Auf den Wurzelabschnitt folgt ein Endabschnitt, der in dem in der Figur 4 dargestellten Axialschnitt gegen sein freies Ende hin stetig schmäler wird und durch eine konvex gekrümmte, nämlich halbkreisförmige Endfläche 13h begrenzt wird, die stetig in die beiden ebenen Begrenzungsflächen 13g übergeht. Die Schmalseiten des Mitnehmers 13f werden durch Begrenzungsflächen 13i gebildet, die in einem rechtwinklig zur Drehachse der Spannvorrichtung 7 gelegten Schnitt konvex gekrümmt, nämlich entlang vom Kreisbogen um die Drehachse herum gebogen sind. Die Begrenzungsflächen 13i werden durch Streifen eines Zylindermantels gebildet, der mit der Umfangsfläche des zapfenförmigen Abschnittes 13c fluchtet, wie es besonders deutlich aus der Figur 5 ersehbar ist.

Der Durchmesser des zapfenförmigen Abschnittes 13e des Dorns 13 ist zweckmässigerweise etwas kleiner als der Durchmesser des Spannteils 9b des Schraubstiftes 9. Der Krümmungsradius der halbkreisförmigen Endfläche 13h des Mitnehmers 13 ist vorzugsweise annähernd gleich dem Krümmungsradius der den Grundabschnitt des Einschnittes 9c bildenden Begrenzungsfläche 9d, so dass der Mitnehmer 13f satt oder mit geringem Spiel vorübergehend in den Grundabschnitt des Schraubstift-Einschnittes 9c eingreifen kann. Die Dicke des Mitnehmers 13f, d.h. der Abstand der Begrenzungsflächen 13g ist gleich dem doppelten Radius der Begrenzungsfläche 13h und beträgt etwa 30 bis 50 % des Durchmessers des Spannteils 9b.

Zur Spannvorrichtung 7 gehört noch ein einstückiges, frei drehbares und axial verschiebbar, aber unverlierbar am Dorn 13 gehaltenes, etwa aus Metall, nämlich rostfreiem Stahl bestehendes Klemmorgan 15, das im allgemeinen hülsenartig ist, wobei das freie Ende als Spannzange dient. Das Klemmorgan weist, beginnend bei seinem sich näher beim Dorn-Endabschnitt 13a befindenden Ende, einen mindestens im wesentlichen zylindrischen Haupt- oder Endabschnitt 15a, eine an diesen anschliessende, konische Verjüngung 15b und einen dünneren, mindestens annähernd zylindrischen Endabschnitt 15c auf und ist mit einer koaxialen Durchgangsöffnung 15d versehen. An ihrem sich näher beim Dorn-Endabschnitt 13a befindenden Ende wurde die Klemmhülse 15 nach ihrem Aufschieben auf den Dorn 13 ein wenig radial nach innen gestaucht, so dass der betreffende Endabschnitt 15e des ursprünglich zylindrischen Hauptteils der Durchgangsöffnung 15d ein wenig enger ist als der anschliessende Teil der letzteren. Das Klemmorgan 15 ragt daher im Bereich seines Durchgangsöffnungsabschnittes 15e in die Einschnürung 13d hinein. Der Mittelabschnitt 13b und der zapfenförmige Abschnitt 13e des Dorns 13 oder, genauer gesagt, die einander zugewandten Flächen dieser Dornabschnitte, bilden Anschläge, die die axialen Verschiebungen des Klemmorgans 15 in beiden Richtungen begrenzen. Das Klemmorgan ist in axialer Richtung um eine Strecke verschiebbar, die ungefähr oder mindestens gleich der Tiefe des Einschnittes 9c des Schraubstiftes 9 ist. Der dünnere Endabschnitt 15c des Klemmorgans 15 erstreckt sich in allen Schiebestellungen der letzteren mindestens bis zum freien Ende des Mitnehmers 13f und ragt vorzugsweise in allen möglichen Schiebstellungen über diesen hinaus.

Das Klemmorgan 15 ist von seinem dünneren, dem Dorn-Endabschnitt 13a abgewandten Ende her mit über seinem Umfang verteilten, zu seiner Drehachse parallelen, Einschnitten 15f versehen, die sich beispielsweise durch den dünneren Endabschnitt 15c und die konische Verjüngung 15b hindurch bis in den Endsbschnitt 15a hinein erstrecken und den sie enthaltenden Teil der Hülsenwand in beispielsweise vier Zungen 15g unterteilen. Diese werden bei der Herstellung des Klemmorgans 15 derart zusammengedrückt, dass sich ihre ursprünglich eine Zylinderfläche bildenden Innenflächen und auch die ebenfalls ursprünglich zylindrische Aussenfläche des Klemmorgan-Endabschnittes 15c gegen die freien Zungenenden hin ein wenig an die Drehachse der Spannvorrichtung annähern, wobei das Klemmorgan 15 bei oder nach dieser Verformung der Zungen 15g gehärtet wird, so dass die letzteren gut federn. Bei den freien Endabschnitten der Zungen 15g sind diese auf ihrer Innenseite mit zum freien Zungenende hin von der Achse weggeneigten Flächen 15h versehen, die durch eine konische Erweiterung der Durchgangsöffnung 15d gebildet sind und die beim Fassen des Schraubstiftes 9 das Einlaufen von dessen Spannteil 9b zwischen die Zungen erleichtern. Bei der engsten Stelle der Zungeninnenfläche, d.h. beim Übergang der Flächen 15h in den restlichen Teil der Durchgangsöffnung 15d ist deren Durchmesser geringfügig kleiner als der Aussendurchmesser des Spannteils 9b. Dies ermöglicht, dass die federnden Zungen 15g den Spannteil 9b des Schraubstiftes 9 umgreifen und leicht einklemmen können und der Schraubstift 9, wenn er vom Klemmorgan 15 gehalten wird, nicht von selbst herausfällt, aber doch leicht vom Klemmorgan 15 getrennt werden kann.

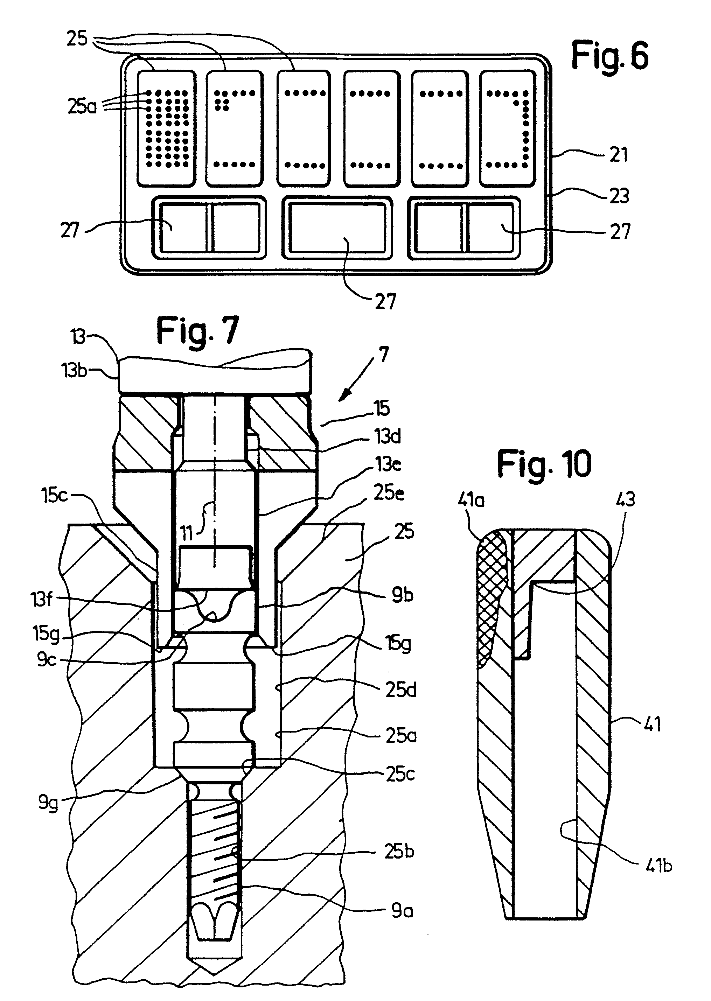

In der Figur 6 ist der Unterteil eines Behälters 21 ersichtlich, dessen Deckel entfernt wurde und in dem ein Einsatz 23 eingesetzt ist. Der letztere ist mit mindestens einem Schraubstift-Träger 25 versehen, der eine Anzahl vertikaler Löcher 25a aufweist, von denen jedes zum Halten eines Schraubstiftes dient. Der Behälter 21 kann beispielsweise sechs Träger 25 und ein Sortiment von sechs verschiedenen Arten von Schraubstiften enthalten, wobei jeder Träger eine Art von Schraubstiften hält und mit einem die betreffende Art bezeichnenden Symbol versehen ist. Es können beispielsweise dünnere und dickere Schraubstifte mit Gewindedurchmessern von 0,6 bzw. 0,8 mm und Spannteildurchmessern von 1 bzw. 1,2 mm vorhanden sein. Ferner können dann sowohl von den dünneren als auch von den dickeren Schraubstiften solche mit einer Spannteillänge von 1,5 mm, 2,5 mm und 3,5 mm vorhanden sein, wobei diese Spannteile dann eine Ringnut bzw. gemäss der Figur 2 zwei Ringnuten 9h bzw. drei Ringnuten aufweisen. Ferner können einige Fächer 27 vorhanden sein, die Spannvorrichtungen 7, Bohrer und sonstige Teile enthalten.

Eines der Löcher 25a ist im Vertikalschnitt in der Figur 7 dargestellt und durch eine abgestufte Bohrung gebildet, wobei der untere, zylindrische Lochabschnitt 25b den kleinsten Durchmesser hat und derart bemessen ist, dass der Gewindeteil 9a eines Schraubstiftes satt oder mit geringem radialen Spiel hineinpasst. An das obere Ende des Lochabschnitts 25b schliesst ein sich konisch erweiternder Lochabschnitt 25c an, auf dem die konische Anschlagfläche 9g des Schraubstiftes 9 aufliegt. Über dem konischen Abschnitt 25c befindet sich ein oberer, zylindrischer Lochabschnitt 25d, dessen Durchmesser grösser als derjenige des unteren, Lochabschnittes 25b, grösser als der Aussendurchmesser des Schraubstift-Spannteils 9b und grösser als der Aussendurchmesser des Endabschnittes 15c des Klemmorgans 15 ist. Die Länge des oberen, zylindrischen Lochabschnittes 25d ist ungefähr gleich der Länge des Spannteils 9b und vorzugsweise etwas grösser als diese. An den Lochabschnitt 25d schliesst ein sich nach oben konisch erweiternder Mündungsabschnitt 25e an. Die Löcher 25a eines jeden Trägers 25 sind alle gleich ausgebildet, und die Löcher der verschiedenen Träger sind entsprechend den verschiedenen Dimensionen der von ihnen gehaltenen Schraubstifte unterschiedlich bemessen.

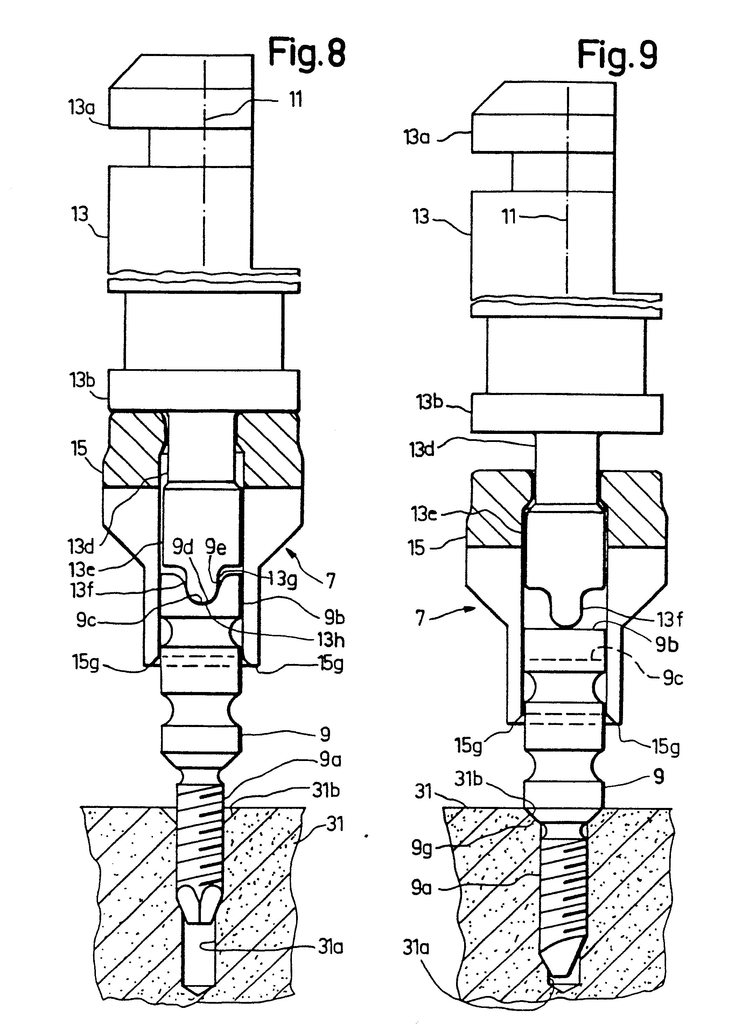

Nun soll die Verwendung der Einrichtung erläutert werden, wenn ein Zahn 31, von dem in den Figuren 8 und 9 ein Abschnitt dargestellt ist, restauriert werden soll. Der Zahnarzt bohrt zuerst für den bzw. jeden einzusetzenden Schraubstift 9 ein bei seiner Mündung eine konische Ansenkung 31b aufweisendes Loch 31a in den Zahn 31, und zwar ein Sackloch, das nicht in die die Pulpa enthaltende Höhle des Zahnes eindringt. Zum Bohren des Loches 31a wird zweckmässigerweise ein Bohrer benutzt und in das Winkelstück 5 der Antriebsvorrichtung 1 eingesetzt, der einen zylindrischen Teil zum Bohren des zylindrischen Hauptabschnittes des Loches 31a und einen konischen Teil zur Bildung der Ansenkung 31b aufweist.

Nach dem Bohren des Loches 31a wird anstelle des Bohrers eine Spannvorrichtung 7 in das Winkelstück 5 der Antriebsvorrichtung 1 eingesetzt. Danach kann der Zahnarzt die Antriebsvorrichtung mit der Hand derart bewegen, dass die an der Antriebsvorrichtung 1 befestigte Spannvorrichtung 7 in ein einen Schraubstift 9 der vorgesehenen Art und Grösse enthaltendes Loch 25a des Behälters 21 hineinragt, wobei dies vorzugsweise bei nicht rotierender Spannvorrichtung geschieht. Der Mündungsabschnitt 25e des Loches 25a führt und zentriert dabei das Klemmorgan 15 der Spannvorrichtung 7 derart, dass man diese ohne Schwierigkeiten in die in der Figur 7 dargestellte Stellung bringen kann. Dabei steht das dem zu fassenden Schraubstift 9 abgewandte Ende des Klemmorgans 15 beim weiter vom Schraubstift 9 entfernten Ende der Einschnürung 13d am Dorn-Mittelabschnitt 13b an und die freien Ende der Zungen 15g umgreifen den obersten Abschnitt des Spannteils 9b und halten diesen. Dabei werden die Zungen leicht elastisch voneinander weggespreizt, so dass ihre Innenflächen-Hauptabschnitte, die bei entspannten Zungen zusammen eine leicht zur Drehachse 11 geneigte Fläche gebildet haben, nun ungefähr achsparallel verlaufen und den Spannteil 9b leicht festklemmen. Der Mitnehmer 13f kann dabei eventuell sogleich in den Einschnitt 9c des Schraubstift-Spannteils 9b eindringen oder, wie es in der Figur 7 gezeichnet ist, an der Endfläche des Spannteils 9b anstehen.

Nun kann man den von der Spannvorrichtung gefassten Schraubstift 9 durch Anheben der Antriebsvorrichtung 1 aus dem Loch 25a herausheben und danach in die Ansenkung 31b des in den Zahn 31 gebohrten Loches 31a einsetzen. Wenn nun die Antriebsvorrichtung 1 in Betrieb gesetzt und der Schraubstift 19 durch eine leichte, mit der Hand auf die Antriebsvorrichtung ausgeübte Kraft gegen den Grund des Loches 31a gedrückt wird, dringt der Mitnehmer 13f in den Einschnitt 9c ein und verbindet dadurch den Dorn 13 der Spannvorrichtung drehfest mit dem Schraubstift 9, wobei das Klemmorgan 15 bezüglich des Schraubstiftes 9 noch etwas weiter gegen dessen Gewindeteil 9a verschoben wird. Wenn das freie Ende des Mitnehmers 13f in diesem Zustand satt oder mit geringem Spiel in den durch die konkav gekrümmte Begrenzungsfläche 9d begrenzten Einschnitt-Grundabschnitt eingreift, ist zwischen den beiden achsparallelen, ebenen Begrenzungsflächen 13g des Mitnehmers 13 und den konvex gekrümmten Begrenzungsflächen 9e des Spannteils 9b je ein freier Zwischenraum vorhanden. Sobald nur der Mitnehmer 13f auf diese Weise in Eingriff mit dem Einschnitt 9c des Schraubstiftes 9 gebracht wurde, dreht der von der Antriebsvorrichtung 1 angetriebene Dorn 13 den Schraubstift 9 und überträgt ein Drehmment auf diesen, wobei der Schraubstift in das Loch 31a des Zahnes 31 eingeschraubt wird, wie es in der Figur 8 veranschaulicht ist.

Wenn der Schraubstift 9 bis zu vorgesehenen Tiefe in das Loch 31a eingeschraubt ist und mit seiner konischen Anschlagfläche 9 die konische Ansenkung 31b erreicht, wird er dadurch abgebremst und zum Stillstand gebracht. Die damit verbundene, schlagartige Erhöhung des die Drehung des Dorns 13 bremsenden Drehmomentes bewirkt, dass der Mitnehmer 13f vom Gewindeteil 9a weg entlang der Drehachse 11 aus dem Einschnitt 9c herausgedrückt wird, wobei sich natürlich der ganze Dorn 13 vom Schraubstift 9 wegbewegt. Dadurch wird die Drehwirkverbindung zwischen dem Dorn 13 und dem Schraubstift 9 unterbrochen und der Dorn 13 kann nun bei stillstehendem Schraubstift noch weiterdrehen, bis der Zahnarzt die Antriebsvorrichtung 1 und die Spannvorrichtung 7 vollständig vom Schraubstift trennt und/oder die Antriebsvorrichtung ausser Betrieb setzt.

Mindestens während derjenigen Phase des Entkupplungsvorganges, in der der Mitnehmer 13f aus dem Einschnitt 9c herausbewegt wird, ist das Klemmorgan 15 bei rotierendem Dorn 13 und stillstehendem Schraubstift 9 am letzteren festgeklemmt, so dass sich der Dorn 13 in dieser Phase bezüglich des Klemmorgans dreht. Während dieser Phase des Entkupplungsvorganges kann sich jedoch der Dorn 13 bezüglich des Klemmorgans 15 so weit verschieben, dass das letztere bezüglich des Schraubstiftes 9 nicht verschoben werden muss. Dies ermöglicht, ein Zerkratzen oder eine sonstige Beschädigung der Umfangsfläche des Spannteils 9b des Schraubstiftes 9 beim Entkuppeln weitgehend zu vermeiden.

Die Einrichtung ermöglicht also einem Zahnarzt oder einer sonstigen Person, einen im Behälter 21 enthaltenen Schraubstift 9 rasch und mühelos mit einer lösbar an der Antriebsvorrichtung 1 befestigte Spannvorrichtung 7 zu fassen, aus dem Behälter 21 herauszunehmen und in ein in den Zahn 31 gebohrtes Loch 31 einzuschrauben. Dabei wird der beim Einschrauben das Drehmoment von der Antriebsvorrichtung 1 auf den Schraubstift 9 übertragende Dorn 13 der Spannvorrichtung automatisch vom Schraubstift 9 entkuppelt, wenn dieser bis zur vorgesehenen Tiefe in den Zahn 31 eingeschraubt ist. Der nach dem Einschrauben des Schraubstift-Gewindeteils 9a mit diesem zusammenhängende und aus dem Loch 31a herausragende Spannteil 9b, der auch einen Schaft- oder Kopfteil des Schraubstiftes 9 bildet, kann dann zum Verankern von künstlichem Zahnmaterial dienen, mit dem der noch vorhandene, natürliche Zahn 31 restauriert wird.

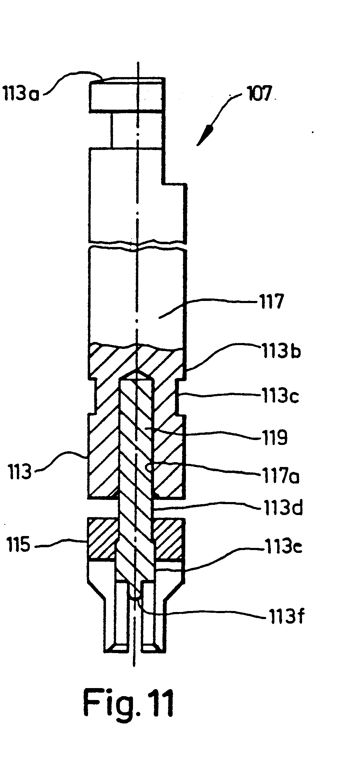

Die Figur 10 zeigt einen hülsenförmigen Handgriff 41, dessen Umfangsfläche mit einer Rändelung 41a oder dergleichen versehen ist und der ein koaxiales Loche 41b aufweist, in dessen eines Ende ein einen Schnappriegelverschluss 43 bildender Einsatz befestigt ist. Die Spannvorrichtung 7 kann statt in das Winkelstück 5 der Antriebsvorrichtung 1 auch in den Handgriff 41 hineingesteckt und lösbar in diesem befestigt werden. Danach kann ein Schraubstift mit dem Handgriff und der in diesen eingesetzten Spannvorrichtung 7 gefasst und in einen Zahn eingeschraubt werden, ähnlich wie es vorgängig für den Fall der Verwendung der Antriebsvorrichtung 1 beschrieben wurde.

Die Einrichtung und ihre Verwendung können in verschiedener Hinsicht modifiziert werden. Beispielsweise könnte etwa die Einschraubtiefe der Schraubstifte in den Zähnen statt durch die konische Anschlagfläche durch eine radiale, d.h. ebene zur Drehachse rechtwinklige Anschlagfläche des Spannteils oder durch eine vom freien Ende des Gewindeteils des Schraubstiftes gebildete Anschlagfläche festgelegt werden, wobei die letztere dann am Grund des gebohrten Loches anstehen würde.

Ferner könnte das Klemmorgan axial unverschiebbar am Dorn gelagert werden.

Es wäre auch möglich, die Profilformen des im Spannteil vorhandenen Einschnittes und/oder des Mitnehmers zu ändern. Beispielsweise könnten die konvex gebogenen Begrenzungsflächen 9c einen grösseren oder kleineren Krümmungsradius besitzen als die konkav gebogene Begrenzungsfläche 9d. Ferner könnte sich die den Einschnitt-Grundabschnitt begrenzende, konkav gebogene Begrenzungsfläche entlang einem weniger als 180° betragenden Bogen erstrecken, wobei dann auch die Bögen, entlang denen die konvex gebogenen Spannteil-Begrenzungsflächen verlaufen, in Graden gemessen derart zu verkleinern wären, dass sich wieder stetige Übergänge zwischen den gebogenen Begrenzungsflächen und der radialen Endfläche ergeben. Ferner könnte dann auch die im Profil halbkreisförmige Mitnehmer-Endfläche 13h gradmässig zu einem weniger als 180° betragenden Bogen verkürzt werden. Zudem bestände eventuell die Möglichkeit, nur einen axialen Teilabschnitt des im Spannteil vorhandenen Einschnittes derart auszubilden, dass er sich zum Grund des Einschnittes hin verengt. Des weitern könnte man vielleicht sogar nur entweder den Einschnitt oder nur den Mitnehmer mindestens in einem axialen Abschnitt derart ausbilden, dass der letztere zum Grund des Einschnittes bzw. zum freien Ende des Mitnehmers schmäler wird.

Die Figur 11 zeigt eine Variante einer Spannvorrichtung 107 mit einem Dorn 113 und einem von diesem gehaltenen Klemmorgan 115, wobei Abschnitten und Bereichen des Dorns 13 entsprechende Abschnitte und Bereiche des Dorns 113 mit um 100 erhöhten Bezugszeichen bezeichnet sind. Bei der Spannvorrichtung 107 ist der einstückige Dorn 13 der Spannvorrichtung 7 durch einen Dorn 113 ersetzt, der aus zwei Teilen besteht, von denen der erste und grössere Dornteil 117 den Endabschnitt 113a und den Mittelabschnitt 113b mit der Markierungsrille 113c bildet. Dieser erste Dornteil 117 ist zudem mit einem koaxialen Loch 117a, etwa einer Sackbohrung, versehen, in der der zweite, kleinere, stiftförmige Dornteil 119 befestigt, vorzugsweise eingepresst und/oder, beispielsweise mit Hartlot, eingelötet ist. Der aus dem ersten Dornteil 117 herausragende Abschnitt des zweiten Dornteils 119 bildet dann die Einschnürung 113d, den zapfenförmigen Abschnitt 113e und den Mitnehmer 113f des Dorns 113.

Die zur Verwendung bereit gestellten Schraubstifte können statt in einem verschliessbaren Behälter auch in einem Sortiertablett bzw. einem als solches ausgebildeten, eventuell unverschliessbaren Behälter aufbewahrt werden.

Des weitern könnten anstelle von Parapulpär-Schraubstiften auch zum Einschrauben in Wurzelkanäle von Zähnen vorgesehene Schraubstifte in ähnlicher Weise ausgebildet und eingeschraubt werden. Zum Einschrauben in Wurzelkanäle bestimmte Schraubstifte sind üblicherweise grösser als Parapulpär-Schraubstifte und ihre Gewindeteile haben typischerweise Durchmesser, die grösser als 1 mm sind und beispielsweise 1,2 mm bis 1,8 mm betragen.

**Patentansprüche**

1. Einrichtung mit einem einen Gewindeteil (9a) sowie einen Spannteil (9b) aufweisenden Schraubstift (9) zum Einschrauben in einen Zahn (31), insbesondere zur parapulpären Anordnung im Zahn (31), und einer Spannvorrichtung (7) zum Halten des Spannteils (9b) des Schraubstiftes (9) und zum Erstellen einer Drehwirkverbindung mit dem Gewindeteil (9a), wobei Mittel vorhanden sind, um die Drehwirkverbindung beim Anstehen des Schraubstiftes (9) am oder im Zahn (3) zu unterbrechen, dadurch gekennzeichnet, dass der Spannteil (9b) an seinem dem Gewindeteil (9a) abgewandten Ende mit einem Einschnitt (9c) versehen ist, dass die Spannvorrichtung (7) einen Dorn (13) mit einem mit dem Einschnitt (9c) in Eingriff bringbaren Mitnehmer (13f) und ein Klemmorgan (15) mit federnden Zungen (15g) zum vorübergehenden Umfassen und Halten des Spannteils (9b) aufweist und dass der Einschnitt (9c) einen zu seinem Grund hin und/oder der Mitnehmer (13f) einen zu seinem freien Ende hin schmäler werdenden Abschnitt aufweist, so dass der Mitnehmer (13f) beim Anstehen des Schraubstiftes (9) aus dem Einschnitt (9c) heraus gelangt.

2. Einrichtung nach Anspruch 1, dadurch gekennzeichnet, dass sich der Einschnitt (9c) von seiner Mündung zu seinem Grund hin stetig verengt und einen durch eine konkav gekrümmte Begrenzungsfläche (9d) des Spannteils (9b) begrenzten Grundabschnitt sowie einen Mündungsabschnitt aufweist, der beidseitig durch eine konvex gekrümmte Begrenzungsfläche (9e) des Spannteils (9b) begrenzt ist, wobei jede dieser beiden konvex gekrümmten Begrenzungsflächen (9e) stetig an die konkav gekrümmte Begrenzungsfläche (9d) anschliesst und wobei vorzugsweise bei bis zum Grundabschnitt des Einschnittes (9c) in diesen eingreifendem Mitnehmer (13f) zwischen dem letzteren und den beiden konvex gekrümmten Begrenzungsflächen (9e) des Spannteils (9b) Zwischenräume vorhanden sind.

3. Einrichtung nach Anspruch 2, dadurch gekennzeichnet, dass der Spannteil (9b) eine ebene, radiale Stirnfläche (9f) aufweist, in die die konvex gekrümmten Begrenzungsflächen (9e) stetig übergehen.

4. Einrichtung nach Anspruch 2 oder 3, dadurch gekennzeichnet, dass die konkav gekrümmte Begrenzungsfläche (9d) entlang einem höchstens und vorzugsweise gleich 180° betragenden Kreisbogen verläuft.

5. Einrichtung nach einem der Ansprüche 2 bis 4, dadurch gekennzeichnet, dass die konvex gekrümmten Begrenzungsflächen (9e) des Spannteils (9b) je entlang einem höchstens und vorzugsweise gleich 90° betragenden Kreisbogen verlaufen.

6. Einrichtung nach einem der Ansprüche 1 bis 5, dadurch gekennzeichnet, dass die grösste Querschnittsabmessung des Spannteils (9b) grösser ist als der Durchmesser des Gewindeteils (9a) und dass beim Übergang vom Gewindeteil (9a) in den Spannteil (9b) eine vom Gewindeteil (9a) nach aussen ragende, beispielsweise konische Anschlagfläche (9g) zur Begrenzung der Einschraubtiefe des Schraubstiftes (9) vorhanden ist.

7. Einrichtung nach einem der Ansprüche 1 bis 6, dadurch gekennzeichnet, dass der Mitnehmer (13f) an seinem dem Grund des Einschnittes (9c) zuzuwenden bestimmten Ende durch eine konvex gekrümmte Endfläche (13h) begrenzt ist, deren Profil vorzugsweise satt oder mit geringem Spiel in dasjenige des Grundabschnittes (9d) des Einschnittes (9c) hineinpasst und die vorzugsweise entlang einem höchstens und beispielsweise gleich 180° betragenden Kreisbogen verläuft.

8. Einrichtung nach einem der Ansprüche 1 bis 7, dadurch gekennzeichnet, dass der Mitnehmer (13f) bei denjenigen einander abgewandten Seiten, die, wenn er in den Einschnitt (9c) eingreift, nicht am Spannteil (9b) anliegen, durch um die Drehachse des Dorns (13) herum gekrümmte, beispielsweise entlang einem zur Drehachse koaxialen Kreisbogen verlaufende Begrenzungsflächen (13i) begrenzt ist.

9. Einrichtung nach einem der Ansprüche 1 bis 8, dadurch gekennzeichnet, dass das Klemmorgan (15) drehbar und zweckmässigerweise begrenzt axial verschiebbar am Dorn (13) gehalten ist, wobei es vorzugsweise um eine Strecke verschiebbar ist, die ungefähr oder mindestens gleich der Tiefe des Einschnittes (9c) ist.

10. Einrichtung nach einem der Ansprüche 1 bis 9, mit einem Behälter (21) oder Sortiertablett, das mindestens einen zur Verwendung vorgesehenen Schraubstift (9) enthält, dadurch gekennzeichnet, dass der Behälter (21) bzw. das Sortiertablett mindestens einen Schraubstift-Träger (25) mit mindestens einem Loch (25a) aufweist, das mit einem Lochabschnitt (25b), in dem der Gewindeteil (9a) des Schraubstiftes (9) steckt, und oberhalb dieses Lochabschnittes (25b) mit einem den Spannteil (9b) des Schraubstiftes (9) umschliessenden Lochabschnitt (25d) versehen ist, dessen Weite mindestens gleich der grössten Querschnittsabmessung des die Zungen (15g) aufweisenden Klemmorgan-Endabschnittes (15c) ist, so dass dieser zum Fassen des Schraubstift-Spannteils (9b) in den letztgenannten Lochabschnitt (25d) einführbar ist.

**Revendications**

1. Dispositif avec un tenon (9), comportant une partie filetée (9a) et une partie de serrage (9b), pour le vissage dans une dent (31) et en particulier en position parapulpaire dans la dent (31), et un organe de serrage (7) pour tenir la partie de serrage (9b) du tenon (9) et pour établir une liaison de rotation avec la partie filetée (9a), des moyens étant prévus pour interrompre la liaison de rotation quand le tenon (9) s'applique sur ou dans la dent (3), ledit dispositif étant caractérisé en ce que l'extrémité de la partie de serrage (9b) opposée à la partie filetée (9a) comporte une entaille (9c); l'organe de serrage (7) comporte un mandrin (13) avec un entraîneur (13f) engrenant avec l'entaille (9c) et un mors (15) à languettes élastiques (15g) pour entourer et fixer temporairement la partie de serrage (9b); et l'entaille (9c) présente une section qui devient plus étroite vers son fond et/ou l'entraîneur (13f) présente une section qui devient plus étroite vers son extrémité libre, de sorte que l'entraîneur (13f) sort de l'entaille (9c) quand le tenon vissé (9) vient en butée.

2. Dispositif selon revendication 1, caractérisé en ce que l'entaille (9c) rétrécit continûment de son ouverture vers le fond et présente une section de base délimitée par une paroi concave (9d) de la partie de serrage (9b), ainsi qu'une section d'ouverture délimitée des deux côtés par une paroi convexe (9e) de la partie de serrage (9b), chacune de ces deux parois convexes (9e) se raccordant continûment à la paroi concave (9d) et des espaces étant avantageusement prévus, dans le cas d'un entraîneur (13f) s'engageant jusqu'à la section de base de l'entaille (9c), entre ledit entraîneur et les deux parois convexes (9e) de la partie de serrage (9b).

3. Dispositif selon revendication 2, caractérisé en ce que la partie de serrage (9b) comporte une face frontale radiale plane (9f) à laquelle se raccordent continûment les parois convexes (9e).

4. Dispositif selon une des revendications 2 ou 3, caractérisé en ce que la paroi concave (9d) s'étend le long d'un arc de cercle au maximum et de préférence égal à 180°.

5. Dispositif selon une quelconque des revendications 2 à 4, caractérisé en ce que les parois convexes (9e) de la partie de serrage (9b) s'étendent chacune le long d'un arc de cercle au maximum et de préférence égal à 90°.

6. Dispositif selon une quelconque des revendications 1 à 5, caractérisé en ce que la dimension maximale en coupe transversale de la partie de serrage (9b) est supérieure au diamètre de la partie filetée (9a); et une face de butée (9g), en saillie sur la partie filetée (9a) vers l'extérieur et par exemple conique, est prévue au raccordement entre les parties filetée (9a) et de serrage (9b) pour limiter la profondeur de vissage du tenon (9).

7. Dispositif selon une quelconque des revendications 1 à 6, caractérisé en ce que l'extrémité de l'entraîneur (13f) dirigée vers le fond de l'entaille (9c) est limitée par une face d'extrémité convexe (13h), dont le profil s'adapte avantageusement à celui de la section de base (9d) de l'entaille (9c), avec ajustement ou un faible jeu, et s'étend avantageusement le long d'un arc de cercle au maximum et par exemple égal à 180°.

8. Dispositif selon une quelconque des revendications 1 à 7, caractérisé en ce que les côtés opposés de l'entraîneur (13f), ne s'appliquant pas sur la partie de serrage (9b) lors de sa pénétration dans l'entaille (9c) sont limités par des parois (13i) présentant une courbure autour de l'axe de rotation du mandrin (13) et s'étendant par exemple le long d'un arc de cercle coaxial à l'axe de rotation.

9. Dispositif selon une quelconque des revendications 1 à 8, caractérisé en ce que le mors (15) est monté en rotation et de préférence en translation axiale limitée sur le mandrin (13), sur lequel sa translation possible est avantageusement sensiblement ou au moins égale à la profondeur de l'entaille (9c).

10. Dispositif selon une quelconque des revendications 1 à 9, avec une boîte (21) ou tablette contenant au moins un tenon vissé (9) dont l'emploi est prévu, ledit dispositif étant caractérisé en ce que la boîte (21) ou la tablette comprend au moins un bloc (25) de tenons vissés avec au moins un trou (25a) présentant une section (25b) dans laquelle est introduite la partie filetée (9a) du tenon vissé (9) et, au-dessus de ladite section (25b), une section (25d) entourant la partie de serrage (9b) du tenon vissé (9) et dont le diamètre est au moins égal à la dimension maximale en coupe transversale de la section d'extrémité (15c) du mors comportant les languettes (15g), de sorte que ladite section peut être introduite dans la section (25d) du trou pour saisir la partie de serrage (9b) du tenon vissé.

**Claims**

1. Arrangement with a threaded post (9), which displays a threaded part (9a) as well as a tightening part (9b), for screwing into a tooth (31), in particular for the parapulpary disposition in the tooth, and a tightening device (7) for the holding of the tightening part (9b) of the threaded post (9) and for the setting-up of an effective rotational connection with the threaded part (9a), wherein means are present to interrupt the effective rotational connection on the threaded post (9) abutting at or in the tooth (3), characterised thereby, that the tightening part (9b) is provided at its end remote from the threaded part (9a) with a recess (9c), that the tightening device (7) displays a shank (13) with an entraining member (13f) bringable into engagement with the recess (9c) and a clamping organ (15) with resilient tongues (15g) for the temporary embracing and holding of the tightening part (9b) and that the recess (9c) displays a portion becoming narrower towards its base and/or the entraining member (13f) displays a portion becoming narrower towards its free end so that the entraining member (13f) gets out of the recess (9c) on the abutting of the threaded post (9).

2. Arrangement according to claim 1, characterised thereby, that the recess (9c) narrows steadily from its mouth towards its base and displays a base portion bounded by a concavely curved boundary surface (9d) of the tightening part (9b) as well as a mouth portion which is bounded at both sides by a convexly curved boundary surface (9e) of the tightening part (9b), wherein each of both these convexly curved boundary surfaces (9e) steadily adjoins the concavely curved boundary surface (9d) and wherein, in the case of the entraining member (13f) engaging into the recess (9c) as far as the base portion thereof, gaps are preferably present between the entraining member (13f) and both the convexly curved boundary surfaces (9e) of the tightening part (9b).

3. Arrangement according to claim 2, characterised thereby, that the tightening part (9b) displays a planar radial end face (9f), into which the convexly curved boundary surfaces (9e) pass over steadily.

4. Arrangement according to claim 2 or 3, characterised thereby, that the concavely curved boundary surface (9d) extends along a circular arc amounting at most and preferably being equal to 180°.

5. Arrangement according to one of the claims 2 to 4, characterised thereby, that the convexly curved boundary surfaces (9e) of the tightening part (9b) each extend along a circular arc amounting at most and preferably being equal to 90°.

6. Arrangement according to one of the claims 1 to 5, characterised thereby, that the greatest cross-sectional dimension of the tightening part (9b) is greater than the diameter of the threaded part (9a) and that an abutment surface (9g), which projects outwardly from the threaded part (9a) and is for example conical, is present at the transition from the threaded part (9a) into the tightening part (9b) for limitation of the depth, to which the threaded post (9) is screwed in.

7. Arrangement according to one of the claims 1 to 6, characterised thereby, that the entraining member (13f) is bounded at its end intended to be facing the base of the recess (9c) by a convexly curved end surface (13h), the profile of which fits preferably flush or with little play into that of the base portion (9d) of the recess (9c) and which preferably extends along a circular arc amounting at most and for example being equal to 180° C.

8. Arrangement according to one of the claims 1 to 7, characterised thereby, that the entraining member (13f) is bounded at those mutually remote sides, which do not lie against the tightening part (9b) when the entraining member (13f) engages into the recess (9c), by boundary surfaces (13i) curved around the rotational axis of the shaft (13) and for example extending along a circular arc co-axial with the rotational axis.

9. Arrangement according to one of the claims 1 to 8, characterised thereby, that the clamping organ (15) is held at the shank (13) to be rotatable and expediently displaceable axially within limits, for which it is preferably displaceable through a distance which is approximately or at least equal to the depth of the recess (9c).

10. Arrangement according to one of the claims 1 to 9, with a container (21) or sorting tray containing at least one threaded post (9) provided for use, characterised thereby, that the container (21) or sorting tray displays a threaded-post carrier (25) with at least one hole (25a), which is provided with a hole portion (25b), in which the threaded part (9a) of the threaded post (9) is plugged, and above this hole portion (25b) with a hole portion, which encloses the tightening part (9b) of the threaded post (9) and the width of which is at least equal to the greatest cross-sectional dimension of the clamping organ end portion (15c) displaying the tongues (15g) so that this is introducible into the last-mentioned hole portion for the retention of the tightening part (9b) of the threaded post.

Fig. 1

Fig. 2

Fig. 3

Fig. 4

Fig. 5

0 145 652

Fig. 6

Fig. 7

Fig. 10

3

0 145 652

Fig.8    Fig.9

5

Fig. 11